# EUROPÄISCHE PATENTSCHRIFT

(11) **EP 2 417 655 B1**
(45) Veröffentlichungstag und Bekanntmachung des Hinweises auf die Patenterteilung: **06.03.2013**
(21) Anmeldenummer: 10715108.6
(22) Anmeldetag: 03.04.2010
(51) Int. Cl.: H01M 4/38, H01M 4/62, H01M 10/052, H01M 10/054, H01M 4/58, C04B 35/52, C04B 35/628, B82Y 30/00, H01M 4/36

(54) **KATHODENMATERIAL FÜR FLUORIDBASIERTE KONVERSIONSELEKTRODEN, VERFAHREN ZU SEINER HERSTELLUNG UND SEINE VERWENDUNG**
CATHODE MATERIAL FOR FLUORIDE-BASED CONVERSION ELECTRODES, METHOD FOR THE PRODUCTION THEREOF AND USE THEREOF
MATÉRIAU CATHODIQUE DESTINÉ À DES ÉLECTRODES DE CONVERSION À BASE DE FLUORURE, PROCÉDÉ DE FABRICATION ET UTILISATION DE CE MATÉRIAU

(30) Priorität: 11.04.2009 DE 102009017262
(43) Veröffentlichungstag der Anmeldung: 15.02.2012
(73) Patentinhaber: Karlsruher Institut für Technologie, 76131 Karlsruhe (DE)
(72) Erfinder: FICHTNER, Maximilian, 68723 Oftersheim (DE); HAHN, Horst, 64342 Seeheim-Jugenheim (DE); PRAKASH, Raju, 76344 Eggenstein-Leopoldshafen (DE)
(86) Internationale Anmeldenummer: PCT/EP2010/002147
(87) Internationale Veröffentlichungsnummer: WO 2010/115601

(56) Entgegenhaltungen:
- WO-A2-2004/051772
- US-A1- 2003 108 480
- US-A1- 2006 035 148
- BRADWAY F ET AL: "Carbon-Metal Fluoride Nanocomposites. STRUCTURE AND ELECTROCHEMISTRY OF FEF3:C" JOURNAL OF THE ELECTROCHEMICAL SOCIETY, ELECTROCHEMICAL SOCIETY. MANCHESTER, NEW HAMPSHIRE, US LNKD- DOI:10.1149/1.1596162, Bd. 150, Nr. 9, 17. Juli 2003 (2003-07-17) , Seiten A1209-A1218, XP002307880 ISSN: 0013-4651 in der Anmeldung erwähnt
- BADWAY F ET AL: "Carbon Metal Fluoride Nanocomposites. HIGH-CAPACITY REVERSIBLE METAL FLUORIDE CONVERSION MATERIALS AS RECHARGEABLE POSITIVE ELECTRODES FOR LI BATTERIES" JOURNAL OF THE ELECTROCHEMICAL SOCIETY, ELECTROCHEMICAL SOCIETY. MANCHESTER, NEW HAMPSHIRE, US LNKD- DOI:10.1149/1.1602454, Bd. 150, Nr. 10, 15. August 2003 (2003-08-15), Seiten A1318-A1327, XP002307881 ISSN: 0013-4651 in der Anmeldung erwähnt
- PRAKASH R; MISHRA A K; ROTH A; KUBEL C; SCHERER T; GHAFARI M; HAHN H; FICHTNER M: "A ferrocene-based carbon-iron lithium fluoride nanocomposite as a stable electrode material in lithium batteries" JOURNAL OF MATERIALS CHEMISTRY, Bd. 20, 15. Januar 2010 (2010-01-15), Seiten 1871-1876, XP002588750 ISSN: 1364-5501 DOI: 10.1039/b919097j
- PRAKASH R ET AL: "A ferrocene-based carbon-iron lithium fluoride nanocomposite as a stable electrode material in lithium batteries", JOURNAL OF MATERIALS CHEMISTRY, THE ROYAL SOCIETY OF CHEMISTRY, CAMBRIDGE, GB, vol. 20, 15 January 2010 (2010-01-15), pages 1871-1876, XP002588750, ISSN: 0959-9428, DOI: 10.1039/B919097J

## Beschreibung

Die Erfindung betrifft ein Kathodenmaterial für fluoridbasierte Konversionselektroden, ein Verfahren zu seiner Herstellung und seine Verwendung.

Zukünftige mobile und portable Anwendungen benötigen Sekundärbatterien mit hohen Energiedichten, wofür sich insbesondere Batterien eignen, auf der Basis des Lithium-Ionenaustauschs arbeiten. Auf diesem Gebiet wurden von J.-M. Tarascon und M. Armand, Nature 414, S. 359, 2001; S.-Y. Chung et al., Nature Materials 1, S. 123, 2002, K. Kang et al., Science 311, S. 977, 2006 sowie von M. Armand und J.-M. Tarascon, Nature 451, S. 652, 2008; Entwicklungen mit Materialien durchgeführt, die Lithium reversibel einlagern können.

Derartige Batterien enthalten Kathodenmaterialien mit Schichtstrukturen oder Einlagerungsmöglichkeiten für Lithium, vor allem LiCoO₂, LiMnO₂ und LiFePO₄. Sie weisen bei Arbeitsspannungen von 3,3-4,0 V meist spezifische Kapazitäten von 90-140 mAh/g auf. Interkalationsmaterialien wie LiNiO₂ und LiMn₂O₄ sind deshalb interessant, da sie kostengünstiger sind und eine bessere Umweltverträglichkeit aufweisen; höhere Speicherdichten wurden allerdings nicht berichtet. Auf der Anodenseite werden vor allem Graphit und verwandte Kohlenstoffe als gut reversible Interkalationssysteme für Lithium eingesetzt, womit spezifische Kapazitäten bis zu 373 mAh/g erreicht wurden.

Vor diesem Hintergrund besteht das Ziel der Entwicklungen darin, neue Batterien zu entwickeln, die kostengünstig herstellbar, umweltverträglich, sicher handhabbar und wenig empfindlich gegenüber Temperatureinflüssen sind, eine nachhaltige Elementzusammensetzung aufweisen, eine hohe Zyklenzahl erlauben und sowohl eine hohe gravimetrische (Wh/kg) als auch eine hohe volumetrische Energiedichte (Wh/l) aufweisen.

Kürzlich wurde gefunden, dass besonders hohe Energiedichten mit Elektrodenmaterialien erreicht werden, die auf der Basis von Konversionsmaterialien anstelle von Einlagerungsmaterialien arbeiten. Auf der Anodenseite haben Y. Oumellal et al., Nature Materials 7, S. 916, 2008 und P.G. Bruce et al., Angew. Chem. Int. Ed. 47, S. 2930, 2008, bereits erste Erfolge mit Oxiden wie SnO₂ oder MoO₃ und Metallhydriden erzielt. In diesen Fällen wurde gezeigt, dass das aktive Material zum Metall reduziert wird, wobei sich parallel dazu eine Lithiumverbindung bildet. Bei der Delithiierung dreht sich die Reaktionsrichtung um und das Metall wird erneut oxidiert.

Auf der Kathodenseite bieten Konversionsmaterialien auf der Basis von Metallfluoriden hohe theoretische Potenziale, die bis zu 2000 mAh/g reichen. Im Prinzip findet hierbei die folgende reversible elektrochemische Reaktion statt:

*n* Li⁺ + *n* e⁻ + Meⁿ⁺F*ₙ* ↔ *n* LiF + Me°.

Demnach reagiert metallisches Lithium beim Entladungsvorgang mit dem Fluorid eines Übergangsmetalls Me unter Bildung von Lithiumfluorid und dem Übergangsmetall. Lithium bildet, z.B. in metallischer Form oder interkaliert in Graphit, die Anode; die Kathode wird aus dem Metallfluorid und einem leitfähigen Kohlenstoff gebildet.

H. Arai, Sh. Okada, Y. Sakurai, J. Yamaki, J. Power Sources, 68, S. 716, 1997, berichten erstmals über das hohe theoretische Potenzial von Metalltrifluoriden, erreichten aber bei Raumtemperatur mit einem Elektrodenmaterial, das aus FeF₃ und Acetylenruß gemischt war, nur eine spezifische Kapazität von 80 mAh/g.

Höhere Kapazitäten wurden in der US 2004/0121235 A1 und von Badway, F. et al. in J. Electrochem. Soc. 150, S. A1209, 2003, und in J. Electrochem. Soc. 150, S. A1318, 2003, für ein Kohlenstoff-Metall-Komposit beschrieben, das z.B. aus 85 Gew.% FeF₃ und 15 Gew.% C zusammengesetzt war und womit bei Raumtemperatur eine spezifische Kapazität von 200 mAh/g erreicht wurde, was der reversiblen Reaktion von Fe³⁺ zu Fe²⁺ im Bereich von 2,8-3,5 V entspricht. Die im Vergleich zu Arai et al. verbesserten Eigenschaften wurden darauf zurückgeführt, dass das Metallfluorid in diesem Falle in kleinerer Korngröße vorlag und innig mit einem leitfähigen Kohlenstoff vermischt war. Es wurden unterschiedliche Mengen an Graphit, Ruß und Aktivkohle mit dem Metallfluorid vermischt und die Mischung für mehrere Stunden in einer Hochenergie-Kugelmühle gemahlen. Die resultierende Kristallitgröße des FeF₃ wurde mit 30-50 nm angegeben. Auf diese Weise konnten spezifische Kapazitäten bis 560 mAh/g erreicht werden, allerdings wies das Material nur eine begrenzte Zyklisierbarkeit auf und es musste wegen der bei Raumtemperatur schlechten Kinetik der Elektrodenprozesse bei 70 °C gemessen werden. In der US 2004/0121235 A1 wird außerdem gezeigt, dass Nanokomposite aus Lithiumfluorid, einem Übergangsmetall und elementarem Kohlenstoff als reversibel arbeitendes Elektrodenmaterial verwendet werden können.

Bervas et al., Electrochem. Solid State Lett. 8, S. A179, 2005, berichteten über eine reversible Reaktion eines BiF₃/C Nanokomposits unter Bildung von Bi und LiF bei einer spezifischen Kapazität von 230 mAh/g. Allerdings weist auch dieses Material keine guten Zykleneigenschaften auf.

Von H. Li, G. Richter und J. Maier, Advanced Materials 15, S. 736, 2003, wurde am Beispiel von TiF₃ und VF₃ wurde gezeigt, dass Übergangsmetalle, die mit Lithium legieren, besser zyklisierbar sind und höhere Zyklenzahlen erlauben als andere, nicht legierende Metalle wie z.B. Eisen, die schnell an Kapazität verlieren. Eine spezifische Kapazität von bis zu 500 mAh/g nach 10 Zyklen wurde für TiF₃ und VF₃ Kathoden berichtet, wobei das Elektrodenmaterial mittels Kugelmahlen aus den Ausgangsstoffen hergestellt worden war.

Makimura et al. berichten in App. Surf. Sci. 252, S. 4587, 2006, und in Electrochem. Commun. 8, 1769, 2006, über die Herstellung eines FeF₃-Films dünner als 1 µm, der mittels gepulster Laser-Desorption auf einem bei -50 °C gekühlten Substrat abgeschieden wurde. Weitere Filme, die bei 600 °C abgeschieden wurden, bestanden aus FeF₂. Beide Filme unterschieden sich in ihrem anfänglichen elektrochemischen Verhalten, das sich aber nach einigen Zyklen dem Verhalten des FeF₂ anglich.

Zur Herstellung von Kathodenmaterialien in Fluorid-basierten Batterien wurden demnach bisher Verfahren angewandt, worin die Ingredienzien mittels Hochenergie-Kugelmahlen mechanisch legiert oder mit Dünnschichtverfahren werden. Diese Verfahren führen offensichtlich zu einer begrenzten Zyklisierbarkeit, Einschränkung der Materialauswahl und einer Erniedrigung der gemessenen spezifischen Kapazität. Damit wird der Einsatz von Metallfluorid-Kathoden durch teilweise Irreversibilität der Elektrodenprozesse und durch schlechte Zykleneigenschaften erschwert.

Aus Leonhardt et al., Chemical Vapor Deposition 12, S. 380, 2006, ist bekannt, dass sich gasförmiges Ferrocen in einem Trägergasprozess bei Temperaturen oberhalb 500 °C komplett nach der folgenden Reaktion zersetzt:

Fe(C₅H₅)₂ → Fe + H₂ + CH₄ + C₅H₆ + ... + reaktive Kohlenwasserstoffe.

Abhängig von der Durchflussrate des Trägergases wirken die Eisencluster als katalytisch wirkende Keime und erzeugen verschiedene Arten von Nanokohlenstoffen, darunter ein- oder mehrwändige Kohlenstoff-Nanoröhren und hohle Kohlenstofffasern, die auf den Katalysatorkeimen wachsen.

Weitere Verfahren zur Herstellung von Nanokohlenstoffen sind Bogenentladung (siehe Ebessen et al., Nature 358, S. 220, 1992), Laserablation (siehe Thess et al., Science 273, S. 483, 1996) und chemische Gasphasenabscheidung (CVD, siehe Jose-Yacaman et al., Appl. Phys. Lett. 62, S. 657, 1993) wie der so genannte *HiPco Prozess* (Nikolaev et al., Chem. Phys. Lett. 313, S. 91, 1999).

Aus der US 6,946,110 B2 ist ein Verfahren zur Herstellung von Kohlenstofffasern bekannt, worin Benzol in einem Inertgasstrom bei 1200 °C in Gegenwart einer organischen Verbindung und eines Übergangsmetallkatalysators zersetzt wird.

Hu et al., Adv. Func. Mater. 17, S. 1873, 2007, zeigten, dass der Einsatz eines mikro- und nanoporösen Kohlenstoffs Vorteile für elektrochemische Anwendungen bringt. Der Kohlenstoff wurde dort über ein aufwändiges Templatverfahren unter Verwendung einer SiO₂-Matrix hergestellt.

In der US 6,465,132 B1 werden durch Reaktionen in einer Gasmischung, die mit einem Trägergas durch einen typischen CVD-Reaktor aus Quarzglas geleitet wurde, aus Ferrocen Kohlenstoff-Nanofasern und -röhren erzeugt. Hierbei war entscheidend, dass eine Vielzahl von Reaktionsparametern, insbesondere Temperatur, Reaktionszeit, Konzentration des Precursors und Durchflussrate eines Trägergases genau eingehalten werden.

Darüber hinaus offenbart die WO 2004/051772 A2 aus dem stand der Technik bekannte, fluoridbasierte Konversionselektroden.

Ausgehend hiervon ist es Aufgabe der vorliegenden Erfindung, ein Kathodenmaterial für fluoridbasierte Konversionselektroden ein Verfahren zu seiner Herstellung und seine Verwendung vorzuschlagen, die die genannten Nachteile und Einschränkungen nicht aufweisen.

Insbesondere soll ein Material bereitgestellt werden, das sich direkt als Kathodenmaterial für fluoridbasierte Konversionselektroden eignet und das sich bei gleichzeitig hoher Kapazität auch bei Raumtemperatur über eine Vielzahl von Be- und Entladezyklen sehr stabil verhält.

Weiterhin soll insbesondere ein Herstellungsverfahren angegeben werden, mit dem sich einfach und kostengünstig Nanokomposite für ein derartiges Kathodenmaterial in einem Schritt aus Vorläufersubstanzen oder -mischungen herstellen lassen.

Diese Aufgabe wird im Hinblick auf das Kathodenmaterial für fluoridbasierte Konversionselektroden durch den Gegenstand des Anspruchs 1, im Hinblick auf das Verfahren zur Herstellung des Kathodenmaterials durch den Gegenstand des Anspruchs 5 und im Hinblick auf die Verwendung des Kathodenmaterials durch den Gegenstand des Anspruchs 14 gelöst. Die Unteransprüche beschreiben jeweils vorteilhafte Ausgestaltungen der Erfindung.

Ein erfindungsgemäßes Kathodenmaterial für fluoridbasierte Konversionselektroden enthält
- Alkalimetallionen, vorzugsweise Lithiumionen oder Natriumionen,
- Fluoridionen sowie
- Metall-Nanopartikel, deren Größen höchstens 20 nm betragen und
- die in einer Matrix aus graphitischem Nanokohlenstoff, vorzugsweise mehrwändigem (multi-wall) Nanokohlenstoff, verteilt sind, wobei die Metallpartikel von den Kohlenstoffstrukturen umschlossen werden.

Ein erfindungsgemäßes Kathodenmaterial für fluoridbasierte Konversionselektroden lässt sich mit dem folgenden Verfahren herstellen, das sich von den gängigen Verfahren zur Herstellung von Nanokohlenstoffen unterscheidet.

Hierzu wird eine Komponente, die ein Metall, bevorzugt ein Übergangsmetall, besonders bevorzugt Ti, V, Cr, Mn, Fe, Co oder Ni, und eine organische Verbindung umfasst, bis zur Zersetzung der organischen Verbindung vorzugsweise in einem geschlossenen Reaktor erhitzt. Vor oder nach dem thermischen Behandlungsschritt wird ein Alkalimetallfluorid vorzugsweise durch Kugelmahlen zugemischt.

In einer Variante des erfindungsgemäßen Verfahrens wird also die Komponente, die das Metall und die organische Verbindung umfasst, zusammen mit dem Alkalimetallfluorid in einem einzigen thermischen Behandlungsschritt umgesetzt.

In einer zweiten Variante des erfindungsgemäßen Verfahrens wird demnach die Komponente, die das Metall und die organische Verbindung umfasst, einem einzigen thermischen Behandlungsschritt unterzogen und anschließend mit dem Alkalimetallfluorid vermischt.

Die für die Durchführung des erfindungsgemäßen Verfahrens erforderliche Komponente umfasst ein Metall und eine organische Verbindung in Form einer einzigen chemischen Verbindung, vorzugsweise ein Metallocen, oder in Form einer Dispersion eines Metallsalzes in einer Matrix aus einer organischen Verbindung.

In einer besonders bevorzugten Ausgestaltung wird ein Metallocen, d.h. eine chemische Verbindung, die in ihrer Struktur sowohl ein Metall als auch eine organische Verbindung enthält, eingesetzt. Hierzu werden trockene Metallocen-Pulver, insbesondere Ferrocen, Cobaltocen, Nickelocen oder Titanocen, oder eine Mischung eines derartigen Metallocens und eines Alkalimetallfluorids, insbesondere Lithiumfluorid oder Natriumfluorid, unter Inertgasatmoshäre in einem Reaktor (Stahlbehälter) gefüllt und vorzugsweise verschlossen. Der Reaktor wird anschließend samt Inhalt zur gewünschten Temperatur, bevorzugt von 600 °C bis 800 °C, erhitzt. Sofern am Anfang nicht gleich ein Alkalimetallfluorid zugesetzt worden war, wird dieses nun anschließend wird bevorzugt durch Kugelmahlen zugemischt. In einer alternativen Ausgestaltung findet die beschriebene Reaktion in einem offenen Behälter statt.

Optional werden die genannten Edukte zusätzlich mit weiteren Aktiv- und Konditionierungsmitteln, insbesondere Bindern und anderen Leitsubstanzen, vermischt.

In einer weiteren Ausgestaltung wird eine hochdispersive Mischung (Dispersion) eines Metallsalzes in einer Matrix aus einem Polymer oder einem Monomer als organischer Verbindung eingesetzt und wie beschrieben thermisch behandelt.

In einer weiteren Ausgestaltung wird eine hochdispersive Mischung (Dispersion) eines Metallsalzes in einer Matrix aus einem biologischen Material, bevorzugt pflanzliches oder tierisches Material, insbesondere Gelatine, als organischer Verbindung eingesetzt und thermisch behandelt.

Das in diesem Verfahren gebildete und Alkalimetallfluorid enthaltende Nanokomposit besteht aus einer Anordnung von Hohl- und Kompaktstrukturen geordneter, vorzugsweise mehrwändiger Graphitstrukturen, die sich in innigem Kontakt mit den Metall-Nanopartikeln, insbesondere aus Ti, V, Cr, Mn, Fe, Co oder Ni, befinden, wobei die Metallpartikel von den Kohlenstoffstrukturen umschlossen werden.

Das mit diesem Verfahren hergestellte Kathodenmaterial besitzt, wie in den Ausführungsbeispielen gezeigt wird, eine andere Mikrostruktur und Zusammensetzung als die bisher bekannten Materialien. Diese neuartige Zusammensetzung des Kathodenmaterials ist eine Voraussetzung für eine gute Reversibilität einer fluoridbasierten Konversionselektrode.

Überraschenderweise zeigte sich, dass bei der Verwendung des erfindungsgemäßen Kathodenmaterials in einer Lithium-Ionenbatterie sowohl im Gegensatz zum o. g. Stand der Technik als auch gegenüber Eisen, das nicht mit Lithium legiert, bei Raumtemperatur eine spezifische Kapazität von 250 bis 300 mAh/g und ein stabiles Verhalten der Batterie über bislang 200 Be- und Entladezyklen beobachtet werden konnte. Damit wurde experimentell nachgewiesen, dass die aus dem Stand der Technik bekannten aufwändigen Versuchsanordnungen und der Einsatz von CVD-Verfahren nicht nötig ist, um ein Nanokomposit herzustellen, das im Vergleich zum Stand der Technik vorteilhafte Eigenschaften als Elektrodenmaterial in fluoridbasierten Batterien besitzt.

Erfindungsgemäße Elemente lassen sich vorzugsweise einsetzen als Kathodenmaterial für fluoridbasierte Konversionselektroden in Alkalimetall-Ionenbatterien, insbesondere in Lithium- oder Natrium-Ionenbatterien.

Die Erfindung weist insbesondere die im Folgenden erwähnten Vorteile auf.

Für die Anwendung in Elektroden, die auf Metallfluoriden basieren, wurde ein Material entwickelt, das ein deutlich stabileres Zyklenverhalten bei Raumtemperatur bei gleichzeitig hoher Kapazität aufweist. Die darin bestehende innige Mischung von leitfähigem Kohlenstoff, d.h. Kohlenstoff-Nanoröhren (CNT) und -Nanofasern (CNF), nanoporösen Kohlenstoffen oder graphitischen Nanokohlenstoffen, mit dem Übergangsmetall bzw. seinem Fluorid brachte wesentliche Vorteile. Ein weiterer Vorteil besteht in der einfachen Herstellung dieses Material in einem thermischen Verfahren.

Die Erfindung wird im Folgenden anhand von Ausführungsbeispielen und der Figuren näher erläutert.

### Allgemeines Herstellungsverfahren

Feinpulvriges Metallocen und Lithiumfluorid (LiF) wurden zunächst unter Vakuum bei Temperaturen vorzugsweise von 100 °C und 200 °C getrocknet. Zur besseren Vermischung der beiden Ausgangsmaterialien wurde eine Kugelmühle bei einer Mahldauer zwischen 15 Minuten und 12 Stunden und einem Kugel:Pulver - Massenverhältnis von > 50:1 eingesetzt.

Der thermische Behandlungsschritt erfolgte unter Inertgasatmosphäre in einem geschlossenen, druckfesten Edelstahlrohr, das in einem Röhrenofen platziert wurde. Danach wurde die Temperatur mit einer Heizrate von vorzugsweise 2-10 K/min auf Temperaturen von 600 °C und 800 °C geheizt und für 1-6 Stunden bei dieser Temperatur belassen. Alternativ wurde der Reaktor in den bereits aufgeheizten Ofen eingeführt.

### 1. Herstellung eines Fe-basierten Kohlenstoff-Nanokomposits

Hierzu wurde gemörsertes Ferrocen in den o. g. Rohrreaktor gegeben, unter Ar-Atmosphäre verschlossen und bei Raumtemperatur in den Röhrenofen eingeführt. Nach dem Hochheizen auf 700 °C wurde die Reaktionsmischung für weitere 2 Stunden bei 700 °C belassen. Der Reaktor wurde entnommen, über ca. 2 Stunden auf Raumtemperatur abkühlen gelassen und danach in einer mit Argon gefüllten Handschuhbox geöffnet, wobei auch gasförmige, kohlenstoffhaltige Reaktionsprodukte entwichen. Die Ausbeute des Materials betrug 85-90%, bezogen auf die Masse der Ausgangsmaterialien. Der Kohlenstoffgehalt des Komposits betrug z.B. 60,2 ± 0,5 Massen%, bestimmt mit Hilfe der Elementaranalyse.

### 2. Herstellung eines Fe/LiF-basierten Kohlenstoff-Nanokomposits

Wie in Bsp. 1 wurden Mischungen von Ferrocen mit feinpulvrigem LiF im geschlossenen System für 2h bei 700 °C behandelt. Die Ausbeute des Produkts betrug 94-95%, bezogen auf die Masse der Ausgangsmaterialien. Der Kohlenstoffgehalt wurde zu 42,1 ± 0,5 Massen% bestimmt.

### 3. Herstellung eines Fe/LiF-basierten Kohlenstoff-Nanokomposits unter Direktheizung

Alternativ wurde das Produkt gemäß Bsp. 2 dadurch hergestellt, dass der Reaktor mit der Reaktionsmischung 0,9 g Ferrocen und 0,34 g LiF direkt in den 700 °C heißen Ofen eingeführt und für 2h bei dieser Temperatur gehalten wurde. Die Ausbeute des Produkts betrug 92-95 %, bezogen auf die Masse der Ausgangsmaterialien. Der Kohlenstoffgehalt im Komposit betrug 41,9 ± 0,5 Massen%.

### 4. Herstellung eines Fe/LiF-basierten Kohlenstoff-Nanokomposits mittels einer kugelgemahlenen Ausgangsmischung

Hierzu wurde die Ausgangsmischung gemäß Bsp. 2 zunächst in einem Mahlbecher aus gehärtetem Stahl mit gehärteten Stahlkugeln gemahlen, wobei das Kugel:Pulver-Massenverhältnis 370:1 betrug. Röntgendiffraktometrische Aufnahmen zeigten, dass die Aufgangsmaterialien durch diese Behandlung lediglich vermischt wurden, während keine Zersetzung oder Materialumwandlung festgestellt werden konnte. Die so gemahlene Mischung wurde in den Reaktor gefüllt, verschlossen und weiter wie in Bsp. 2 behandelt. Die Ausbeute des Materials nach Kugelmahlen und Heizschritt betrug 88%, bezogen auf die Masse der Ausgangsmaterialien. Der Kohlenstoffgehalt betrug 41,8 ± 0,5 Massen%.

### Strukturelle Charakterisierung Fe- bzw. Fe/LiF-basierten Kohlenstoff-Nanokomposite

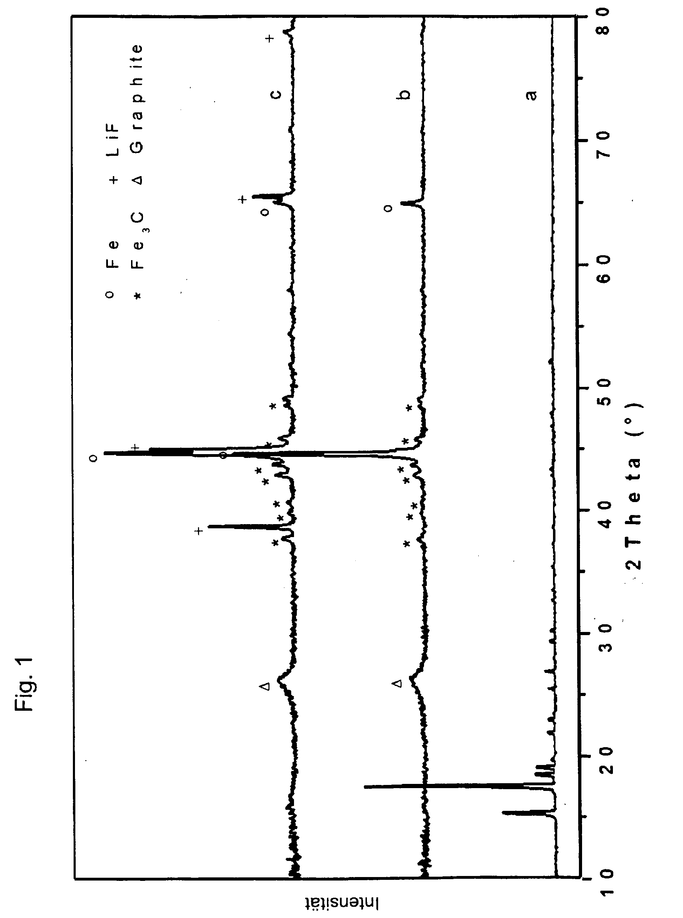

Fig. 1 zeigt Röntgendiffraktogramme (XRD) der Komposite und Ausgangsmischungen unter Inertbedingungen, die zur Charakterisierung der Fe- bzw. Fe/LiF basierten Kohlenstoff-Nanokomposite aufgenommen wurden. In **Fig. 1a****)** ist das XRD von reinem Ferrocen dargestellt, in **Fig. 1b****)** das XRD von einem Fe-basierten Kohlenstoff-Nanokomposit nach Beispiel 1 und in **Fig. 1c****)** das XRD einem Fe/LiF-basierten Kohlenstoff-Nanokomposit, das nach Beispiel 2 hergestellt wurde. Alle Aufnahmen wurden bei Raumtemperatur vorgenommen. In **Fig. 1b****)** und in **Fig. 1c****)** treten neben Fe und LiF auch Fe₃C als Phasen auf, während keine oxidische Phasen zu erkennen sind. Für eine thermisch induzierte Zersetzung von LiF gibt es ebenfalls keine Hinweise.

Die Mikrostruktur des Materials wurde mit Methoden der Elektronenmikroskopie wie *HR-TEM, Hellfeld* (BF) und *Dunkelfeld* (DF) sowie *Selected Area Electron Diffraction* (SAED) untersucht. Hierzu wurden Pulverproben in wasserfreiem Pentan dispergiert, wenige Tropfen auf einen Kohlenstoffträger gegeben und mindestens 2h lang in der Handschuhbox unter Ar getrocknet. Die Proben wurden unter Inertgas zum Mikroskop gebracht und dort nach kurzem Luftkontakt eingeschleust.

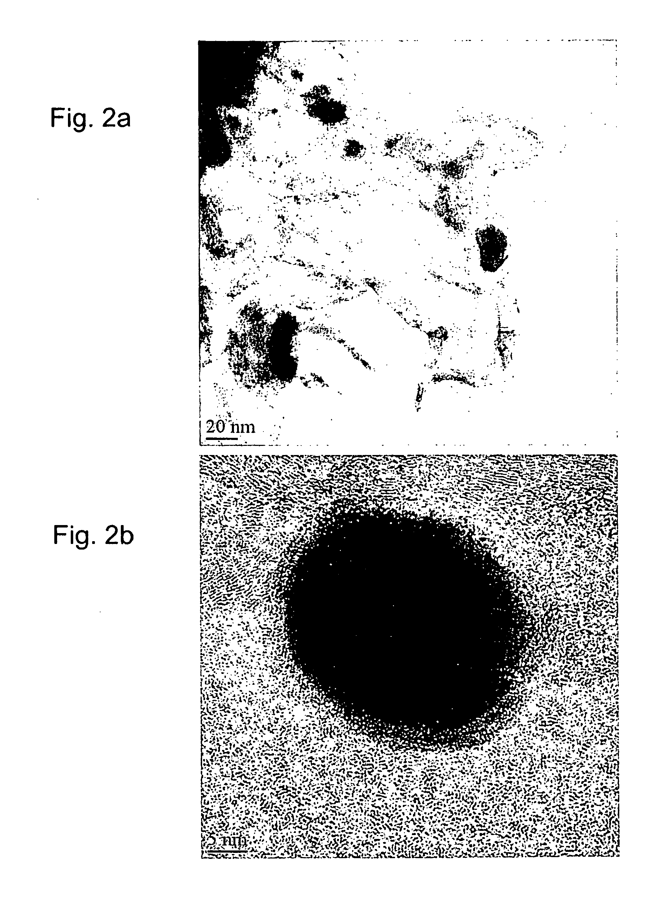

In **Fig. 2** sind Aufnahmen der Komposite dargestellt, die teilweise gewundene Formen von Hohlstrukturen eines graphitischen Nanokohlenstoffs zeigen, in dem Fe-Nanopartikel mit Größen von 2 nm bis 20 nm eingebettet sind. Detailaufnahmen bei höherer Auflösung belegen, dass die Fe-Partikel immer von einer graphitischen Kohlenstoffhülle umgeben sind.

### Elektrochemische Untersuchungen

Elektrochemische Eigenschaften der Nanokomposite wurden mit 2-Elektrodenzellen vom *Swagelok-Typ* untersucht. Die positive Elektrode wurde durch Mischen von Fe/LiF-basierten Kohlenstoff-Nanokompositen mit PVDF-Copolymer als Binder, der z.B. einen Anteil von 10 % an der Gesamtmischung besaß, hergestellt. Alternativ wurde das reine Nanokomposit ohne Zusatz von Binder verwendet. Reines Lithium wurde als negative Elektrode verwendet, während eine Schicht Glasfaserpapier als Separator diente. Als Elektrolyt wurde eine 1:1-Mischung von Ethylencarbonat und Dimethylcarbonat eingesetzt, in der 1 M LiPF₆ gelöst wurde. Be- und Entladezyklen bei konstantem Strom wurden mit einem Batterietester gemessen.

### Elektrochemische Untersuchung eines Fe/LiF-basierten Kohlenstoff-Nanokomposits

Zur elektrochemischen Charakterisierung des Fe/LiF-Kohlenstoff-Nanokomposits gemäß Bsp. 2 wurden eine Reihe von Testzellen bei Raumtemperatur über längere Zeit bei 20,83 mA/g (C/50) zwischen 4,3 und 0,5 V getestet.

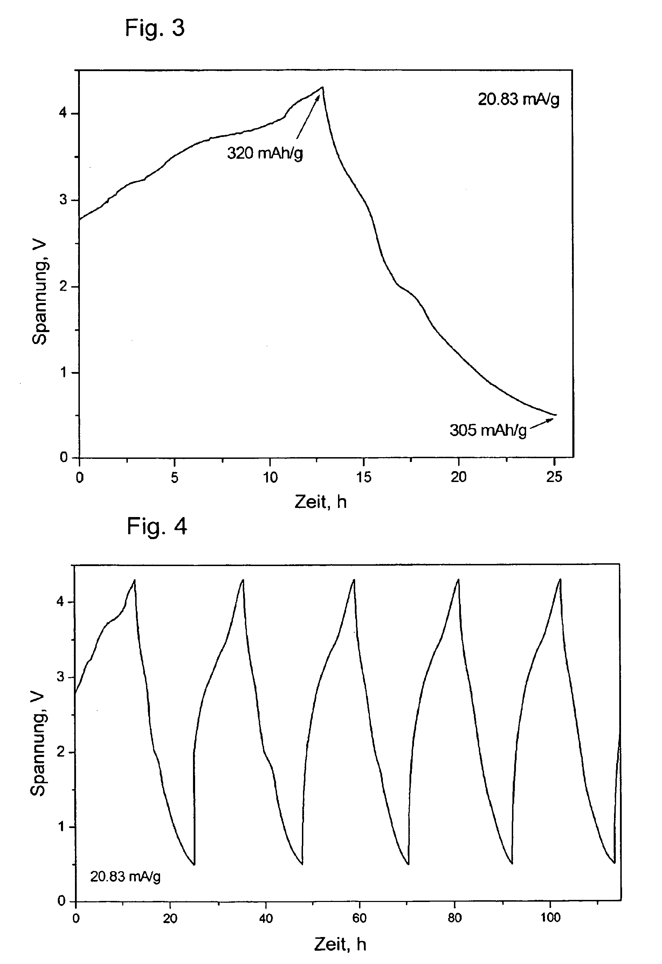

**Fig. 3** zeigt den ersten Be- und Entladevorgang eines Fe/LiF-basierten Kohlenstoff-Nanokomposits im Potentialbereich von 4,3 bis 0,5 V, bei einer Stromdichte von 20,83 mA/g, gemessen bei Raumtemperatur. Hieraus kann entnommen werden, dass die Reaktion reversibel ist mit einer spezifischen Kapazität von 320 bzw. 305 mAh/g, entsprechend 46% der theoretischen Kapazität der Fe/FeF₃-Reaktion. Die dargestellte Kurve weist drei Plateaus auf, was darauf schließen lässt, dass die Reaktion in drei nacheinander ablaufenden Redoxprozessen stattfindet. Eine XRD-Aufnahme des Materials am Ende des ersten Zyklus zeigt die nahezu identische Zusammensetzung wie das Ausgangsmaterial.

Um die Zyklenstabilität des Nanokomposits gemäß Bsp. 2 zu untersuchen, wurde die Batterie mit C/50 für inzwischen mehr als 140 Zyklen bei Raumtemperatur zykliert. Zur besseren Sichtbarkeit der Details sind die ersten fünf Zyklen in **Fig. 4** dargestellt. Die Spannung betrug von 4,3 bis 0,5 V bei einer Stromdichte von 20,83 mA/g, gemessen bei Raumtemperatur.

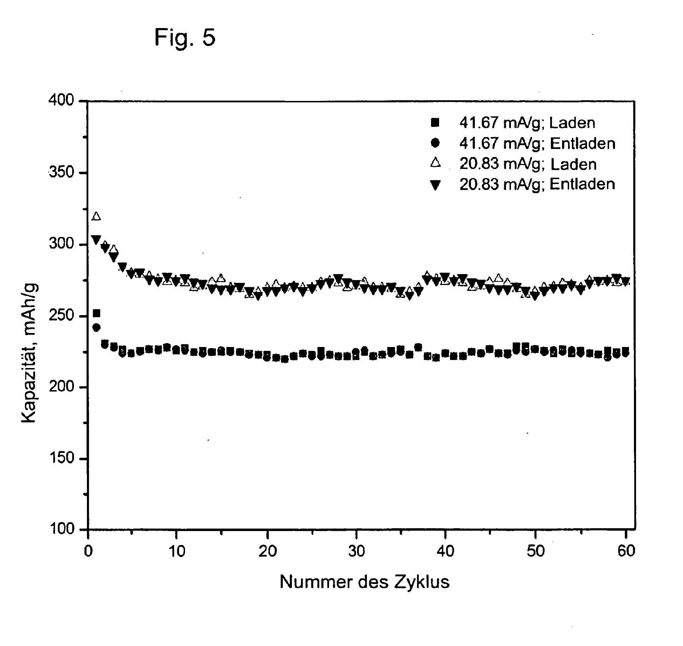

Der Verlauf der spezifischen Be- und Entladekapazität eines Fe/LiF-Kohlenstoff-Nanokomposits als Funktion der Zyklenzahl über die ersten 60 Zyklen und bei verschiedenen Stromstärken ist in Fig. 5 gezeigt. Die Spannung betrug von 4,3 bis 0,5 V bei einer Stromdichte von 20,83 mA/g, gemessen bei Raumtemperatur. Hieraus ist ersichtlich, dass das Nanokomposit auch nach 60 Zyklen eine stabile reversible Kapazität von 280 mAh/g aufweist. Nach einer anfänglichen Abnahme der Kapazität in den ersten Zyklen bleibt die Kapazität über die gesamte Messdauer stabil. Be- und Entladezyklen bei höheren Strömen gemessen (C/20) zeigen, dass sich das Material auch bei Raumtemperatur sehr stabil zyklieren lässt, im Gegensatz zum bisher bekannten Stand der Technik.

Das reversible Verhalten des Materials bei niedrigeren und höheren Beladungsströmen zwischen 10.42 mAh/g (C/100) und 1.05 Ah/g (1C) wurde ebenfalls untersucht. **Fig. 5** zeigt, dass die Kapazität mit steigender C-Rate sinkt, ein Effekt der üblicherweise bei Batterien beobachtet wird. Unabhängig davon blieb die Zyklenstabilität aber erhalten.

## Patentansprüche

1. Kathodenmaterial für fluoridbasierte Konversionselektroden, enthaltend Alkalimetallionen, Fluoridionen und Metall-Nanopartikel mit Größen von höchstens 20 nm, die in einer Matrix aus graphitischem Nanokohlenstoff verteilt sind, dadurch charakterisiert, dass die Metallpartikel von den Kohlenstoffstrukturen umschlossen werden.

2. Kathodenmaterial nach Anspruch 1 mit Lithiumionen oder Natriumionen als Alkalimetallionen.

3. Kathodenmaterial nach Anspruch 1 oder 2 mit einer Matrix aus mehrwändigem Nanokohlenstoff.

4. Kathodenmaterial nach einem der Ansprüche 1 bis 3 mit Fe-Nanopartikel als Metall-Nanopartikel.

5. Verfahren zur Herstellung eines Kathodenmaterials für fluoridbasierte Konversionselektroden nach einem der Ansprüche 1 bis 4, worin eine Komponente, die ein Metall und eine organische Verbindung umfasst, in einem einzigen thermischen Behandlungsschritt bis zur Zersetzung der organischen Verbindung erhitzt wird, wobei vor oder nach dem thermischen Behandlungsschritt ein Alkalimetallfluorid zugegeben wird.

6. Verfahren nach Anspruch 5, wobei das Metallfluorid durch Kugelmahlen zugemischt wird.

7. Verfahren nach Anspruch 5 oder 6, wobei Lithium- oder Natriumfluorid als Metallfluorid eingesetzt wird.

8. Verfahren nach einem der Ansprüche 5 bis 7, wobei ein Metallocen als Komponente, die ein Metall und eine organische Verbindung umfasst, eingesetzt wird.

9. Verfahren nach Anspruch 8, wobei ein Metallocen eingesetzt wird, das ein Übergangsmetall enthält.

10. Verfahren nach Anspruch 9, wobei Ferrocen als Metallocen eingesetzt wird.

11. Verfahren nach einem der Ansprüche 8 bis 10, wobei das Metallocen in einem abgeschlossenen Reaktionsbehälter mit einem Metallfluorid im Bereich von 600 °C bis 800 °C thermisch zersetzt wird.

12. Verfahren nach einem der Ansprüche 5 bis 7, wobei eine Dispersion eines Metallsalzes in einer Matrix aus einer organischen Verbindung eingesetzt wird.

13. Verfahren nach Anspruch 12, wobei eine Dispersion eines Metallsalzes in einer Matrix aus einem Polymer, einem Monomer oder einem biologischen Material als organischer Verbindung eingesetzt wird.

14. Verwendung eines Kathodenmaterials für fluoridbasierte Konversionselektroden nach einem der Ansprüche 1 bis 4 in einer Alkalimetall-Ionenbatterie.

## Claims

1. Cathode material for fluoride-based conversion electrodes, comprising alkali metal ions, fluoride ions and metal nanoparticles having sizes of no more than 20 nm which are distributed in a matrix of graphite nanocarbon, **characterised in that** the metal particles are surrounded by the carbon structures.

2. Cathode material according to claim 1 with lithium ions or sodium ions as alkali metal ions.

3. Cathode material according to claim 1 or 2 with a matrix of multi-walled nanocarbon.

4. Cathode material according to any one of claims 1 to 3 with Fe nanoparticles as metal nanoparticles.

5. Method for producing a cathode material for fluoride-based conversion electrodes according to any one of claims 1 to 4, wherein a component comprising a metal and an organic compound is heated in a single thermal treatment step until the organic compound is decomposed, whereby an alkali metal fluoride is mixed in before or after the thermal treatment step.

6. Method according to claim 5, wherein the metal fluoride is admixed by ball milling.

7. Method according to claim 5 or 6, wherein lithium fluoride or sodium fluoride is used as metal fluoride.

8. Method according to any one of claims 5 to 7, wherein a metallocene is used as a component which comprises a metal and an organic compound.

9. Method according to claim 8, wherein a metallocene is used which contains a transition metal.

10. Method according to claim 9, wherein ferrocene is used as a metallocene.

11. Method according to any one of claims 8 to 10, wherein the metallocene is thermally decomposed in a closed reaction vessel with a metal fluoride in the range from 600°C to 800°C.

12. Method according to any one of claims 5 to 7, wherein a dispersion of a metal salt is used in a matrix of an organic compound.

13. Method according to claim 12, wherein a dispersion of a metal salt is used in a matrix of a polymer, a monomer or a biological material as an organic compound.

14. Use of a cathode material for fluoride-based conversion electrodes according to any one of claims 1 to 4 in an alkali metal ion battery.

## Revendications

1. Matériau de cathode pour électrodes de conversion à base de fluorure renfermant des ions de métal alcalin, des ions fluorures et des nanoparticules métalliques ayant une granulométrie maximum de 20 nm, qui sont répartis dans une matrice en nano-carbone graphitique,
**caractérisé en ce que**
les particules métalliques sont encapsulées dans la structure de carbone.

2. Matériau de cathode conforme à la revendication 1, renfermant des ions lithium ou des ions sodium en tant qu'ions de métal alcalin.

3. Matériau de cathode conforme à la revendication 1 ou 2 renfermant une matrice de nano-carbone à plusieurs cloisons.

4. Matériau de cathode conforme à l'une des revendications 1 à 3, renfermant des nanoparticules de fer en tant que nanoparticules métalliques.

5. Procédé d'obtention d'un matériau de cathode pour des électrodes de conversion à base de fluorure conforme à l'une des revendications 1 à 4, selon lequel un composant qui renferme un métal et un composé organique est chauffé dans une seule étape de traitement thermique jusqu'à la décomposition du composé organique, un fluorure de métal alcalin étant ajouté avant ou après cette étape de traitement thermique.

6. Procédé conforme à la revendication 5, selon lequel le fluorure métallique est mélangé dans un broyeur à galets.

7. Procédé conforme à la revendication 5 ou 6, selon lequel on utilise du fluorure de lithium ou du fluorure de sodium en tant que fluorure métallique.

8. Procédé conforme à l'une des revendications 5 à 7, selon lequel on utilise en métallocène en tant que composant renfermant un métal et un composé organique.

9. Procédé conforme à la revendication 8, selon lequel on utilise un métallocène qui renferme un métal de transition.

10. Procédé conforme à la revendication 9, selon lequel on utilise du ferrocène en tant que métallocène.

11. Procédé conforme à l'une des revendications 8 à 10, selon lequel le métallocène est décomposé thermiquement dans un réacteur fermé avec un fluorure métallique dans une plage de température de 600°C à 800°C.

12. Procédé conforme à l'une des revendications 5 à 7, selon lequel on utilise une dispersion d'un sel métallique dans une matrice en un composé organique.

13. Procédé conforme à la revendication 12, selon lequel on utilise une dispersion d'un sel métallique dans une matrice en un polymère, un monomère ou un matériau biologique en tant que composé organique.

14. Utilisation d'un matériau de cathode pour des électrodes de conversion à base de fluorure conforme à l'une des revendications 1 à 4 dans une batterie métal alcalin-ion.
